# EUROPEAN PATENT SPECIFICATION

(11) **EP 2 578 494 B1**
(45) Date of publication and mention of the grant of the patent: **18.06.2014**
(21) Application number: 12187430.9
(22) Date of filing: 05.10.2012
(51) Int. Cl.: B64D 11/00, B60R 11/02

(54) **Video display monitor and deployment system**
Video-Anzeigemonitor und Entfaltsystem
Moniteur d'affichage vidéo et système de déploiement

(30) Priority: 07.10.2011 US 201161544489 P; 04.10.2012 US 201213644596
(43) Date of publication of application: 10.04.2013
(73) Proprietor: Honda Motor Co., Ltd., Tokyo 107-8556 (JP)
(72) Inventor: Harter, Eugene, Raymond, Ohio 43067-9705 (US); Miller, Jeffrey Scott, Raymond, Ohio 43067-9705 (US); Osborne, Chistopher, Raymond, Ohio 43067-9705 (US)
(74) Representative: Herzog, Markus

(56) References cited:
- WO-A1-2006/062359
- WO-A2-2007/016613
- FR-A1- 2 929 202
- GB-A- 2 414 330
- US-A- 5 847 685

## Description

### BACKGROUND

### Field of the invention

The present disclosure relates generally to video display monitors that may be utilized in a vehicle or other environment where space is limited. In particular, the disclosure relates to a video display monitor that may be stowed when not in use, and manually deployed to a viewing position for use.

A video display monitor is known from GB 2141330, which is regarded as the closest prior art.

### SUMMARY

In one aspect, a video display and deployment system is disclosed, and as defined by the features of claim 1. The system comprises a deployment assembly configured to deploy and stow a video display. The system also comprises a video display movably mounted to the deployment assembly and movable between a stowed position and a fully extended position.

In another aspect, a system comprising a video monitor and a deployment assembly coupled to the video monitor is disclosed. The deployment assembly is configured to move the video monitor between a first position and a second position. Further, the video monitor is deflected downward between the first position and the second position.

In yet another aspect, a video deployment system is disclosed. The video deployment system includes a deployment system housing that defines a cavity. The deployment system housing further defines a longitudinal direction running from a first end to a second end, where the second end includes an opening to the cavity. The deployment system also includes a deployment assembly mounted within the deployment system housing and a video monitor coupled to the deployment assembly. According to at least one embodiment, the deployment assembly is configured to move the video monitor in the longitudinal direction between a first position substantially within the deployment system housing and a second position outside the deployment system housing.

Other systems, methods, features and advantages of the disclosure will be, or will become, apparent to one of ordinary skill in the art upon examination of the following figures and detailed description. It is intended that all such additional systems, methods, features and advantages be included within this description and this summary, be within the scope of the disclosure, and be protected by the following claims.

### BRIEF DESCRIPTION OF THE DRAWINGS

The invention can be better understood with reference to the following drawings and description. The components in the figures are not necessarily to scale, emphasis instead being placed upon illustrating the principles of the invention. Moreover, in the figures, like reference numerals designate corresponding parts throughout the different views.
FIG. 1 is a schematic environmental diagram of an embodiment of a video display monitor;
FIG. 2 is a schematic diagram of an embodiment of a video display monitor and deployment system housing, wherein the video display monitor is in a deployed position;
FIG. 3 is a schematic diagram of an embodiment of a video display monitor and deployment system housing, wherein the video display monitor is in a stowed position;
FIG. 4 is a schematic top perspective view of an embodiment of a video display monitor and deployment system, wherein the video display monitor is in a stowed position;
FIG. 5 is a schematic top perspective view of an embodiment of a video display monitor and deployment system in a stowed position, wherein the deployment system housing has been removed;
FIG. 6 is a schematic top perspective view of an embodiment of a video display monitor and deployment system, wherein the video display monitor is in a deployed position;
FIG. 7 is a schematic top perspective view of an embodiment of a video display monitor and deployment system in a deployed position, wherein the deployment system housing has been removed;
FIG. 8 is an embodiment of a deployment assembly and base section of a video display monitor and deployment system;
FIG. 9 is a schematic top perspective of an embodiment of a portion of a deployment assembly in a stowed position;
FIG. 10 is a schematic top perspective of an embodiment of a portion of a deployment assembly in an extended position;
FIG. 11 is a schematic diagram of an embodiment of a base section of a video display monitor and deployment system;
FIG. 12 is a schematic side view of an embodiment of a portion of a deployment assembly;
FIGS. 13A-13B are schematic diagrams of an embodiment of a portion of a deployment assembly in both stowed (FIG. 13A) and deployed (FIG. 13B) positions;
FIGS. 14A-14B depict schematic side views of an embodiment of portions of a deployment assembly in both stowed (FIG. 14A) and deployed (FIG. 14B) positions;
FIG. 15 is a schematic side view of an embodiment of a video display monitor and deployment system, wherein the video display monitor is in a stowed position;
FIG. 16 is a schematic side view of an embodiment of a video display monitor and deployment system, wherein the video display monitor is in a deployed position; and
FIG. 17 is a schematic diagram of a deployment path according to an embodiment described herein.

### DETAILED DESCRIPTION

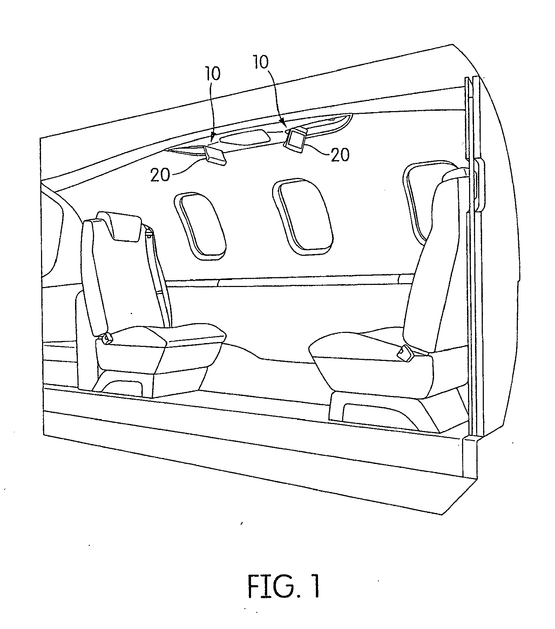

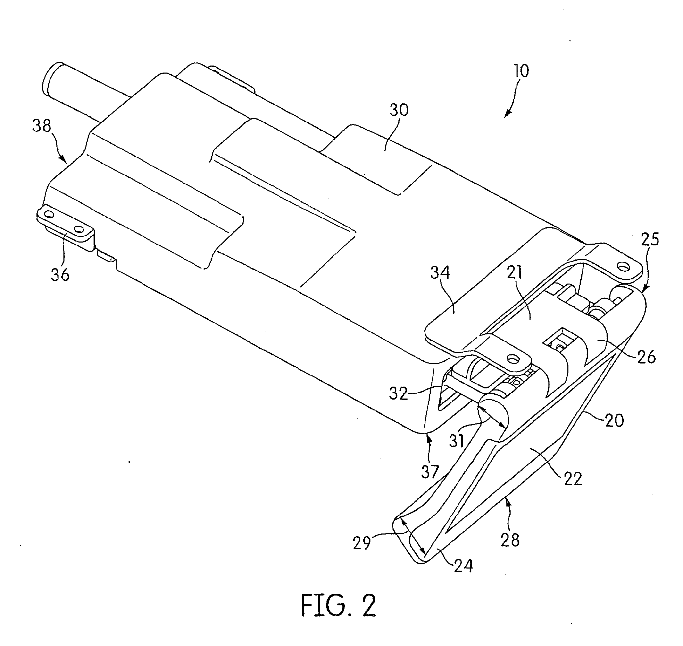

Stowable video display monitors may be installed in a number of environments for a variety of purposes. For example, newer vehicles, including airplanes, may include a stowable or otherwise space-saving video display monitor for entertainment purposes, emergency services, navigation or other purpose. FIG. 1 is a diagram depicting video display system 10, or system 10, installed in the ceiling of an airplane cabin according to at least one embodiment set forth herein. Referring to FIG. 1, in a deployed position, video monitors 20 may extend down from the ceiling by a hinge that is connected to the remainder of the deployment assembly (not shown in FIG. 1). FIG. 2 depicts video display system 10, separately, including video monitor 20 and deployment system housing 30, as system 10 may be installed in an environment such as that depicted in FIG. 1.

### General Structure

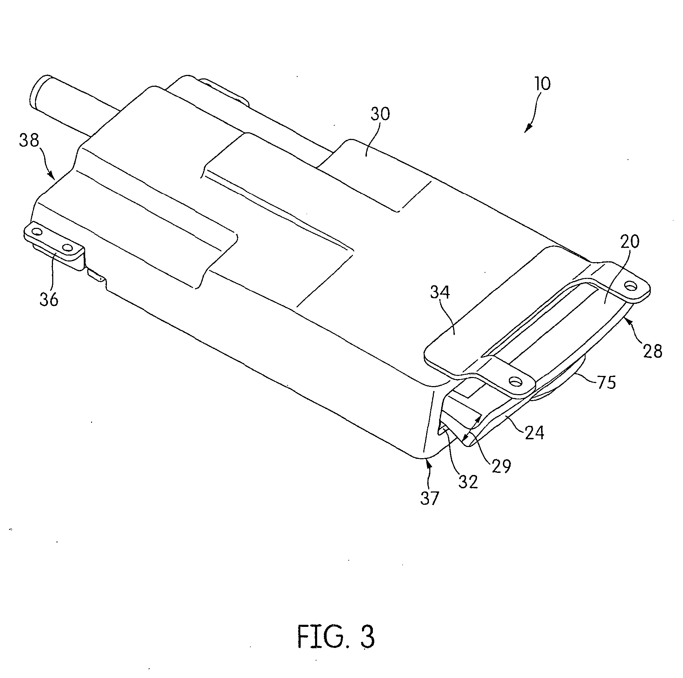

Referring to FIGS. 2 and 3, according to at least one embodiment, system 10 may include a video monitor 20, a deployment system housing 30, with an opening 32 therein, and a deployment assembly (not shown in FIGS. 2 and 3 and discussed in more detail below). According to aspects set forth herein, system 10 allows for video monitor 20 to be stowed within housing 30 when not in use. FIGS. 2 and 3 depict system housing 30 with video monitor 20 in both an extended and stowed position, respectively. When in a fully extended viewing position as seen in FIG. 2, video monitor may be deployed through opening 32 of housing 30. When in a stowed, space-saving position as seen in FIG. 3, video monitor may slide in opening 32 of housing 30 such that video monitor 20 lies substantially within housing 30.

Video monitor 20 includes a display screen 22 and body 24 with a top portion 25 and a bottom portion 28, as would be customary in the art and contemplated by a skilled artisan. Video monitor body 20 may have a size and shape to fit within housing 30 when in a stowed position. In some cases, video monitor body may be tapered such that either top portion 25 or bottom portion 28 have varying depths. As may be seen in FIGS. 2 and 3, in at least one case, bottom portion 28 has a depth 29 that is wider than a depth 31 of top portion 25. This may allow for top portion 25 of video monitor 20 to easily fit within housing 30. In addition, when in a stowed position a wider bottom portion 28 of video monitor 20 may serve to substantially cover opening 32. When in a stowed position, bottom portion 28 may also reveal handle 75 to facilitate deployment by a user.

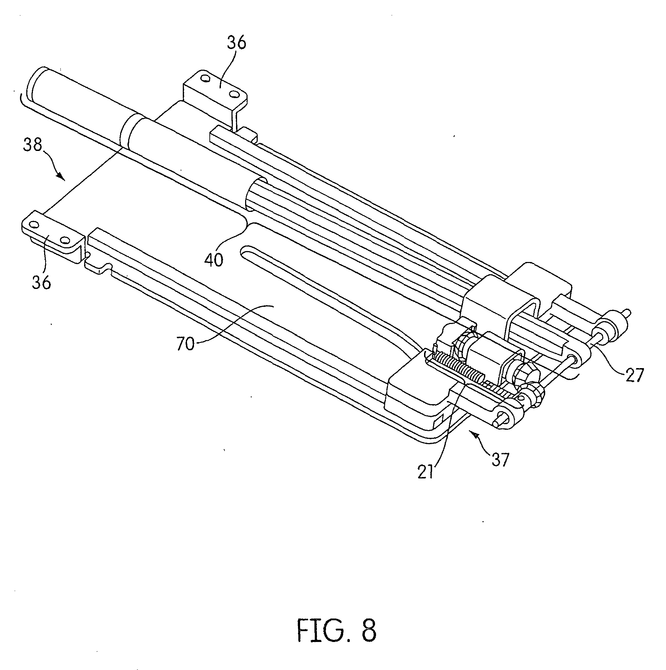

In addition (but not shown) video monitor 20 includes a power inlet, a microprocessor and memory, and may include a connection to a video content source as would be known in the art. Further, video monitor 20 may be connected to a deployment assembly (as described further below) to facilitate deployment of video monitor 20 to a viewing position as well as stowage of video monitor 20. In some cases, video monitor 20 may be connected to a deployment assembly by a hinge 26 surrounding a crossbar 27 (see FIG. 8). In other cases, video monitor 20 may be connected using other methods known to a skilled artisan. As depicted in FIGS. 2 and 3, hinge 26 allows video monitor 20 to rotate from a substantially horizontal and stowed position (FIG. 3) into a substantially vertical viewing position when fully extended and deployed (FIG. 2). It is also contemplated that hinge 26 may allow a viewer to adjust the deflection of video monitor 20 to reach a desirable viewing position.

System housing 30 may include a substantially rigid body for protecting video monitor 20, deployment system 40 (discussed below) and video display system electronics (not shown), which may be housed inside. In some cases, housing 30 may be constructed of a rigid polymer. In other cases, housing 30 may be constructed of an alternative material to blend in with surrounding materials, such as metal, wood, glass, or other suitable material. In still other cases, the video deployment system housing may be incorporated with the overall structure of the surrounding environment such that the housing is not a separate structure.

Further, in cases where system housing 30 is separately formed, as in the embodiment depicted in the figures, housing 30 may be equipped with a variety of structures to secure housing 30 to its surrounding environment. Referring to FIGS. 2 and 3, in at least one embodiment, housing 30 may include hardware 34 at a proximal end 37 of housing 30 and hardware 36 at a distal end 38 of housing 30. Thus, housing 30 may be secured to the ceiling structure of an airplane cabin by a traditional screw or other fixture using hardware 34 and hardware 36. It should be understood, however, that housing 30 may be secured in a variety of ways, or may be incorporated into the structure of the surrounding environment as well.

Depending on how housing 30 is configured and secured to its environment, in some cases, only portions of video display system 10 may be visible. For example, in the embodiment depicted in FIG. 1, only video monitor 20 is visible when in a deployed position. In other cases, however, deployment system housing may be mounted directly on an exterior surface and may be visible. Moreover, video display system 10 may be installed in a variety of other environments and/or locations. For instance, the video display system set forth herein could also be installed in a motor vehicle, such as a car or recreational vehicle, or other environment such as a classroom or in the waiting area of an airport or train station.

The video display system described herein may also be installed in a number of configurations. In some cases, a video monitor and deployment system 10 may be installed on a ceiling such that video display monitor 20 deflects downward when it is deployed. In other configurations, the video monitor and deployment system may be installed in a manner such that the video display monitor deflects upward or flips up when deployed. In still other cases, the video monitor may be installed in a manner such that the video display deploys from a side position. Thus, it should be understood that the video display system as described herein may be configured and/or attached in a variety of ways and still fall within the spirit and scope of the present disclosure.

### Deployment Assembly Structure and Operation

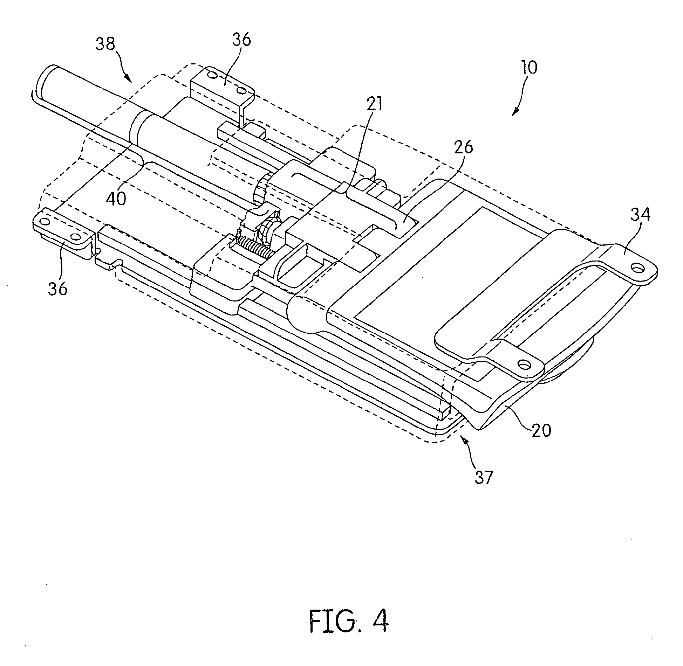

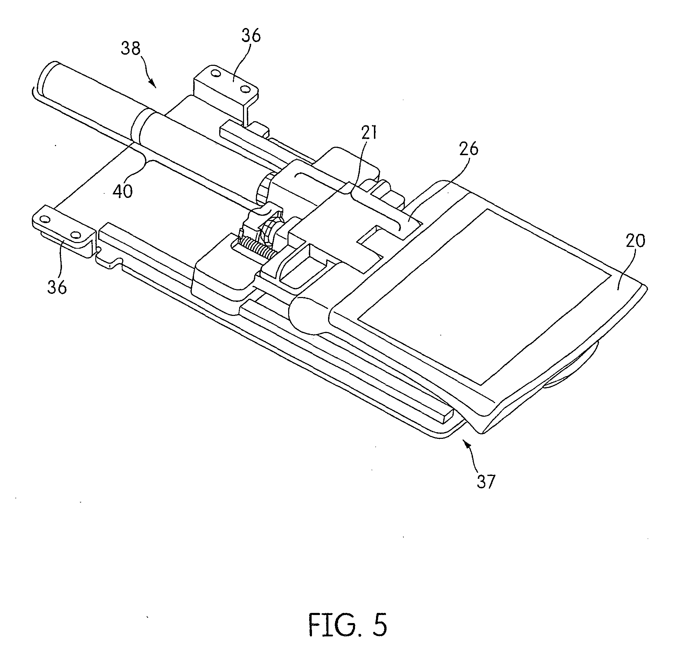

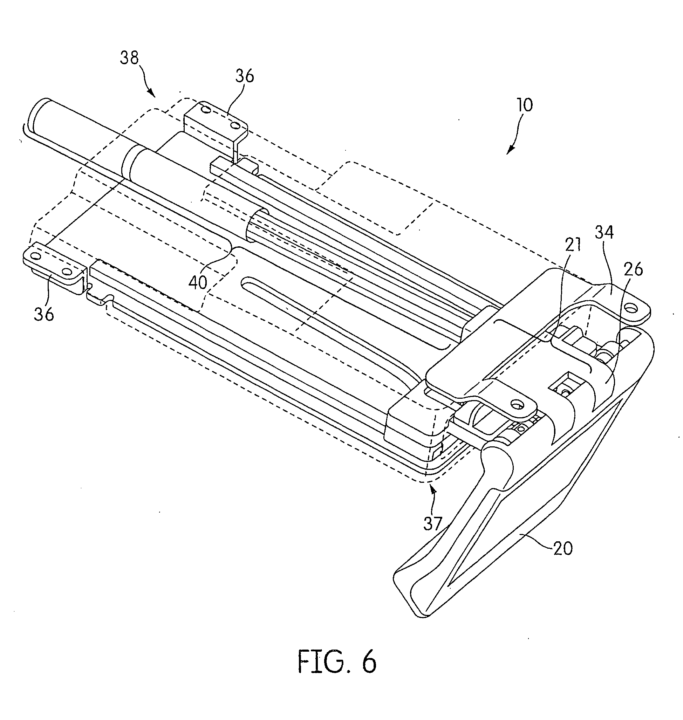

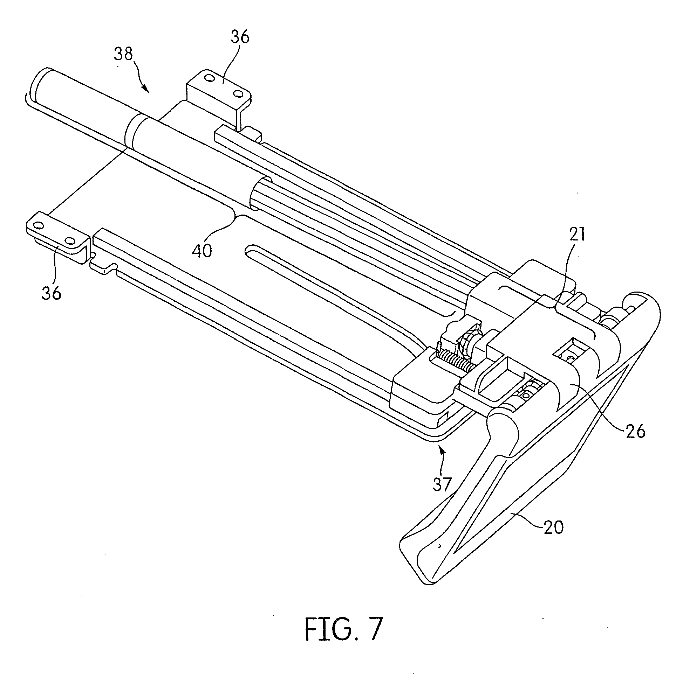

As previously described, system 10 may include one or more provisions to allow for deployment of monitor 20 from housing 30 for viewing. Referring to FIGS. 4-8, according to at least one embodiment, system 10 may be configured with deployment system 40 to facilitate the deployment of monitor 20 from within housing 30, as well as for the space-saving storage of monitor 20 within housing 30 when not in use. FIGS. 4-8 depict system 10 (or a portion of system 10) in a manner such that the deployment assembly 40 is visible. In FIGS. 4 and 6, deployment assembly 40 may be seen within housing 30 in a stowed and fully extended position, respectively. In FIGS. 5 and 7, housing 30 has been removed to reveal deployment assembly 40 in a stowed and fully extended position respectively.

Deployment assembly 40 may be configured to accomplish at least two movements within system 10. First, deployment assembly 40 may include a mechanism to provide movement of monitor 20 in a longitudinal direction running from distal end 38 to proximal end 37 of housing 30. This movement allows monitor 20 to extend laterally out of housing 30 in the longitudinal direction at opening 32. Second, deployment assembly 40 may include a mechanism to pivot monitor 20 such that monitor 20 deflects downward (or upward or sideways, depending on the configuration) for viewing. In other words, when monitor 20 is deflected for viewing, monitor 20 may pivot such that the top portion 25 and bottom portion 28 of monitor 20 are aligned in a direction that crosses or is substantially perpendicular to the longitudinal direction running from distal end 38 to proximal end 37 of housing 30.

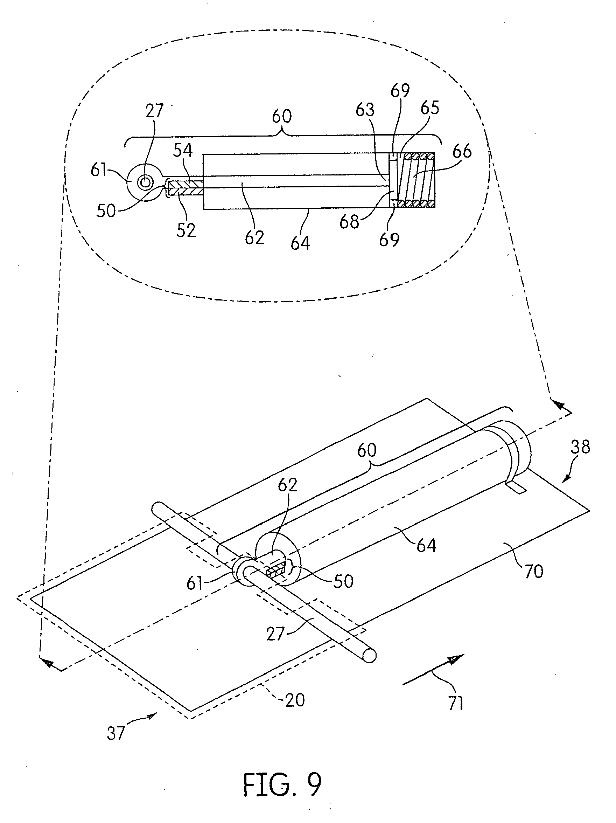

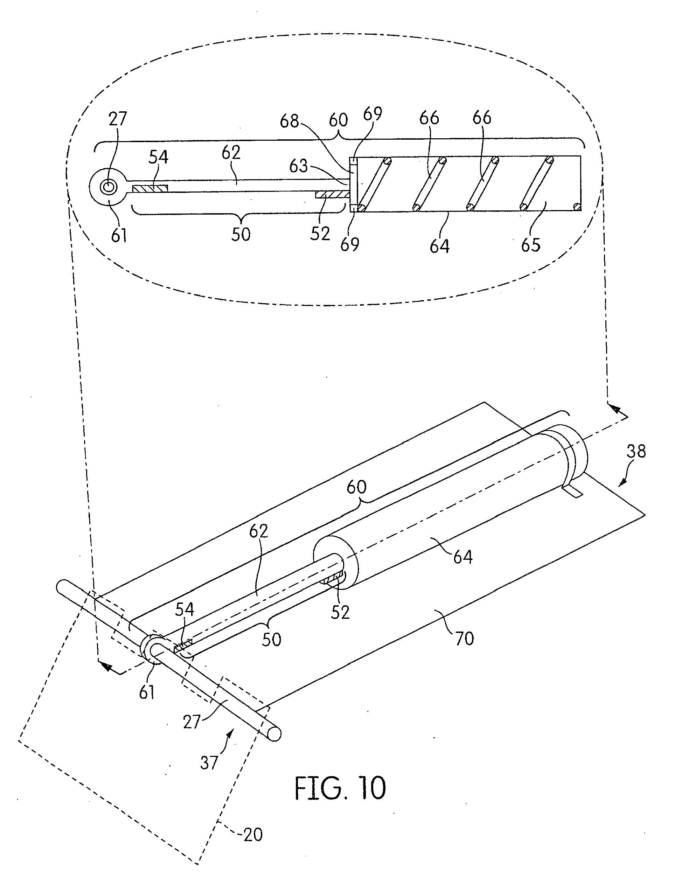

FIGS. 9 and 10 depict deployment assembly 40 and base plate 70 according to at least one embodiment described herein. Specifically, FIG. 9 depicts a top perspective view and a cross-sectional view of deployment assembly 40 in a stowed position. Similarly, FIG. 10 depicts a top perspective view and a cross-sectional view of deployment assembly 40 in a deployed position. Referring to FIGS. 9 and 10, in at least one embodiment, deployment assembly 40 may include a spring-biased pneumatic damper system 60 to propel monitor 20 laterally out of housing 30 from distal end 38 to proximal end 37 for viewing. Further, to release monitor 20 from within housing 30 as well as to secure monitor 20 within housing 30 at the appropriate time, damper system 60 may include a push-to-open, push-to-close type latch system 50.

FIGS. 9 and 10 depict an example of a spring-biased pneumatic damper system 60 working in conjunction with a conventional push-push latch system 50 as would be known in the art. In particular, FIG. 9 depicts damper system 60 when monitor 20 is in a stowed and latched position. FIG. 10 depicts damper system 60 when monitor 20 is in an extended and unlatched position.

According to aspects set forth herein, and as would be recognized by those skilled in the art, as seen in FIGS. 9 and 10, damper system 60 may be configured as known in the art and may include cylinder 64 and rod 62. Rod 62 may be attached to crossbar 27 at a first end 61. Attachment to crossbar 27 may facilitate movement of monitor 20, which may also be attached to crossbar 27 at hinge 26. At a second end 63, rod 62 may be connected to a dampening mechanism 68. Dampening mechanism 68 may seal off air within spring chamber 65, allowing air to pass when forced through air damper outlets 69. Dampening mechanism 68 may further serve to separate rod 62 from spring 66.

Rod 62 may also be configured with push-push latch 50, comprising component 52 and 54. Push-push latch 50 may be a conventional push-push latch as would be known in the art. In addition, those skilled in the art will understand and recognize that a variety of suitable latching or securing techniques may be used to both release and secure monitor 20 within housing 30 and still fall within the scope of the present disclosure. Further, those skilled in the art will recognize suitable alternative methods for configuring a spring-biased pneumatic damper system for use with a deployment assembly as disclosed herein.

In operation, to activate the extension of monitor 20 when in a stowed position, a user may push monitor 20 at bottom portion 28 towards distal end 38 of housing 30. In other words, a user may depress monitor 20 according to directional arrow 71 of FIG. 9. This directional pushing motion will release push-push latch 50, allowing spring 66 to bias towards proximal end 37, pushing rod 62 out of cylinder 64. This motion in turn pushes cross-bar 27 and monitor 20 out of housing 30. In addition, acting against spring 66 to control the deployment speed, a pneumatic dampening mechanism, such as dampening mechanism 68, known in the art, will control the airflow out of cylinder 64 through air damper outlets 69 to prevent rapid biasing of spring 66. Further, as would be understood by skilled artisans, the deployment speed may be adjusted by adjusting the size of air damper outlets 69.

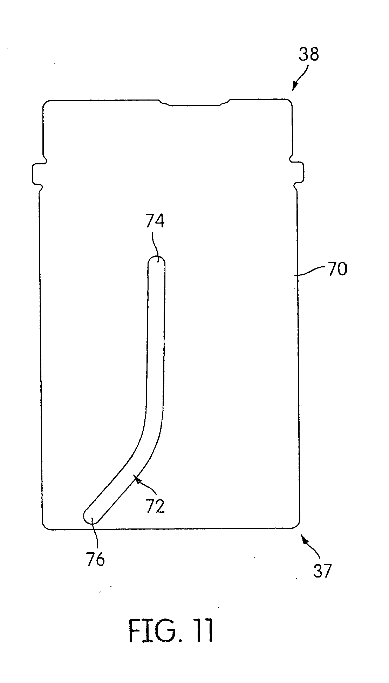

In addition to the movement of monitor 20 from a distal end 38 to proximal end 37 of housing 30, assembly 40 may also include a mechanism to pivot monitor 20 as it exits opening 32 of housing 30 such that monitor 20 deflects downward for viewing. Figures 11-14B depict various aspects of a gear and pin/cam pivot system 80 for deflecting monitor 20 as it extends out of housing 30, according to at least one embodiment disclosed herein.

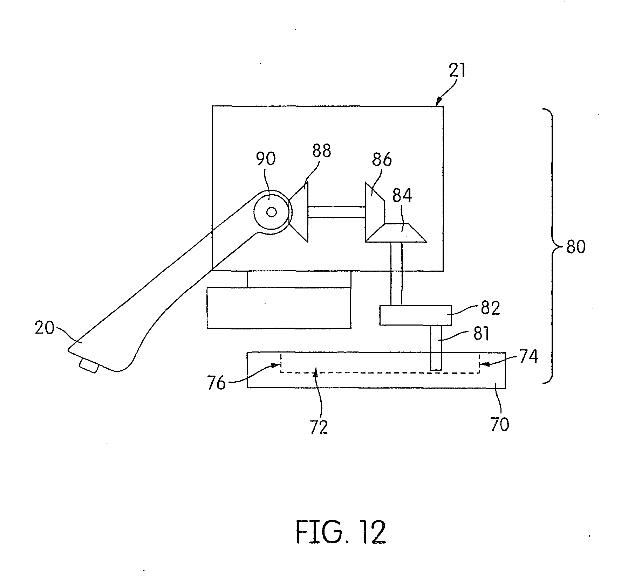

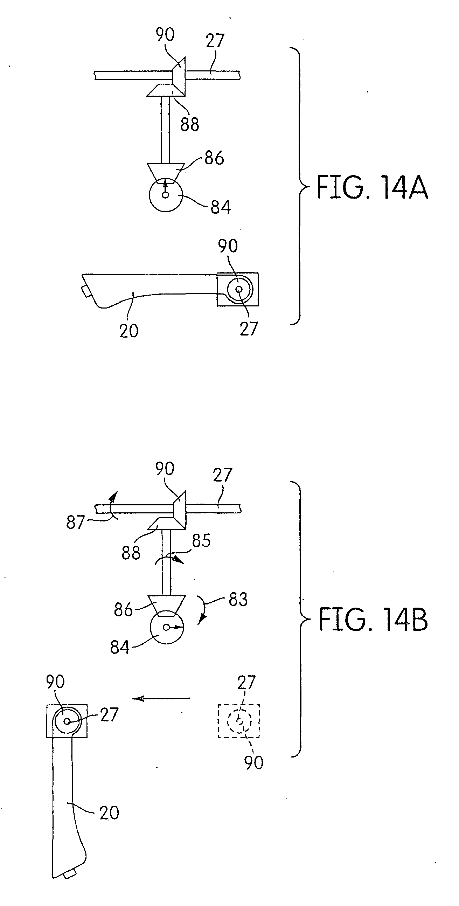

Referring first to FIG. 12, gear and pin/cam pivot system 80 includes a cam arm 82 with pin 81, configured to slide through groove 72 on base plate 70. Cam arm 82 is mounted to monitor carriage 21, as shown in FIG. 12. Gear and pin/cam pivot system 80 includes a plurality of gears, including first gear 84, second gear 86, third gear 88 and fourth gear 90. As depicted in FIGS. 12, 14A and 14B, first gear 84 and second gear 86 interlock together, and third gear 88 and fourth gear 90 may interlock together. Fourth Gear 90 interlocks with cross bar 27 to rotate crossbar 27. As would be known in the art, the interlocking may be accomplished with gear teeth or with any other method contemplated by a skilled artisan.

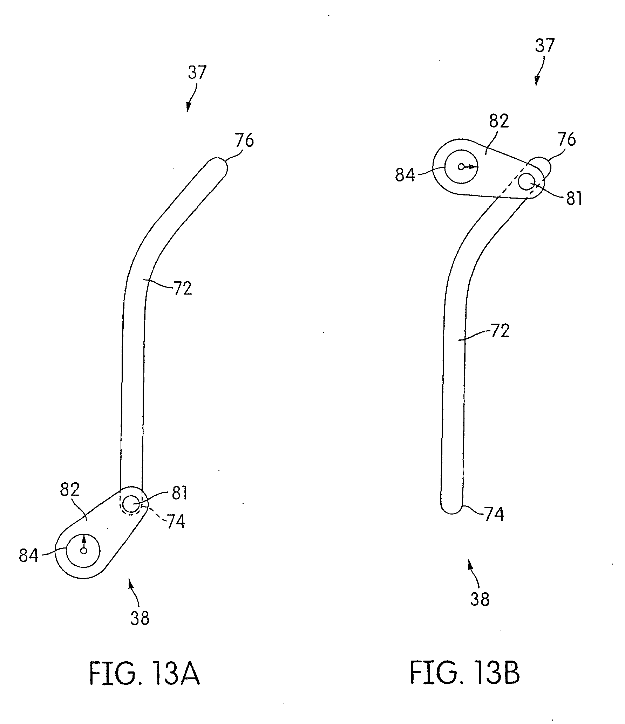

Referring to FIGS. 11-13B, according to an embodiment set forth herein, operation of gear and pin/cam pivot system 80 may begin when monitor 20 is deployed from distal end 38 to proximal end 37 of system 10 by damper system 60. FIGS. 13A and 13B depict the movement of cam arm 82 and pin 81 along groove 72 of base plate 70 (base plate 70 depicted in FIG. 11). In particular, FIG. 13A depicts cam arm 82 and pin 81 when monitor 20 is in a stowed position and FIG. 13B depicts cam arm 82 and pin 81 when monitor 20 is in a deployed position. Referring to FIGS. 13A and 13B, the forward movement of carrier 21 (carrier 21 depicted in FIG. 12) causes cam arm 82 and pin 81 to progress through groove 72 from a first end 74 to a second end 76. Due to the curved nature of groove 72, as cam arm 82 moves from a position near groove end 74 to a position near groove end 76, cam arm 82 may cause first gear 84 to rotate in a clockwise direction, as shown in the movement of first gear 84 from the stowed position of FIG. 13A to the deployed position of FIG. 13B.

FIGS. 14A and 14B depict a top-view of the movement of first gear 84, second gear 86, third gear 88, fourth gear 90 and cross-bar 27, as well as a respective side view of monitor 20 as it moves from a stowed position (FIG. 14A) to a deployed position (FIG. 14B). Referring to FIG. 14B, as first gear 84 rotates in a clockwise direction, *i.e.,* direction 83, second gear 86 is engaged and rotates in direction 85. The movement of second gear 86 also causes third gear 88 to rotate in direction 85. Again, as third gear 88 rotates, fourth gear 90 is engaged and rotates in direction 87. Since fourth gear 90 is rigidly connected to cross-bar 27, the rotation of fourth gear 90 also causes crossbar 27 to rotate in direction 87. And finally, since crossbar 27 lies within hinge 26 (hinge 26 depicted in FIGS. 5-7), the rotation of crossbar 27 rotates hinge 26, effectively rotating monitor 20 into a fully deployed viewing position.

In addition, while gear and pin/cam pivot system 80 has been described as in relation to the depicted embodiment, those of skill in the art will recognize that any of various components of gear and pin/cam pivot system 80 may be varied and still fall within the scope of the present invention.

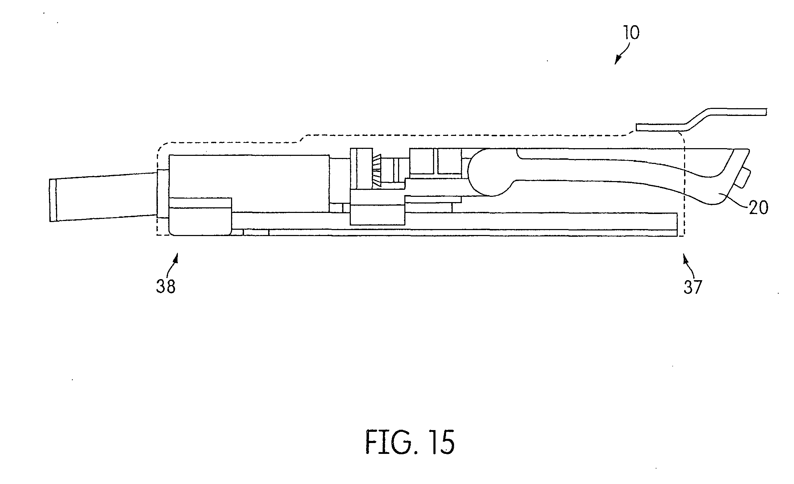

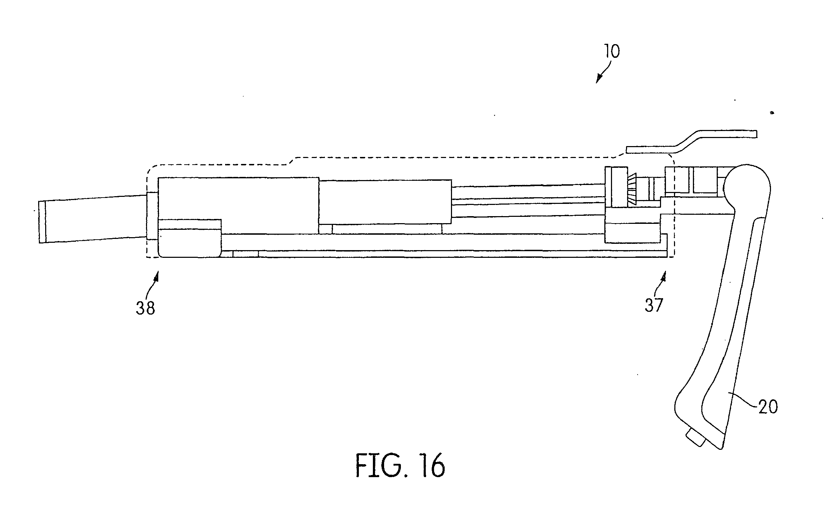

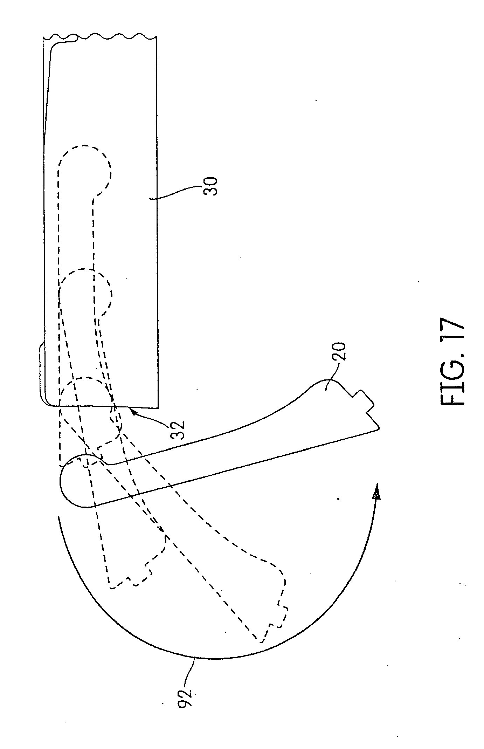

FIGS. 15-17 depict a side view of video display monitor and deployment system 10 as monitor 20 moves from distal end 38 to proximal end 37 and into a fully extended position (shown in FIG. 16). In at least one embodiment described herein, monitor 20 may follow deployment path 92 as it exits opening 32 of housing 30. Those skilled in the art will appreciate; however, that deployment path 92 may be varied and still fall within the scope of the present disclosure. For instance, in cases where monitor 20 is configured to deflect upward or in a sideways direction, deployment path of monitor 20 would follow an upwards or sideways trajectory, respectively.

While various embodiments of the present disclosure have been described, the description is intended to be exemplary, rather than limiting and it will be apparent to those of ordinary skill in the art that many more embodiments and implementations are possible that are within the scope of the invention. Accordingly, the disclosure is not to be restricted except in light of the attached claims and their equivalents.

## Claims

1. A video deployment system comprising:
a deployment assembly (40) configured to deploy and stow a video display (22); and
a video monitor (26) movably mounted to the deployment assembly (40) and movable between a first position and a second position, wherein said video monitor (20) is coupled to the deployment assembly (40) and configured to deflect downward between the first position and the second position, wherein the deployment assembly (40) comprises a gear and pin/cam system (80) coupled to a spring-biased pneumatic damper system (60), and wherein the gear and pin/cam system (80) is coupled to a base plate (70) having a groove (72) having a curved nature,
wherein the gear and pin/cam system (80) comprises a plurality of interlocking gears (84, 86, 88, 90) coupled to the video monitor (20) and to a pin (81), wherein the pin is included on a pin arm (82) and is configured to slide in the groove (72), and
wherein the gear and pin/cam system (80) further comprises:
a first gear (84) coupled to the pin (81);
a second gear (86) configured to interlock with the first gear (84);
a third gear (88) coupled to the second gear (86); and
a fourth gear (90) configured to interlock with the third gear (88) and coupled to the video monitor (20), wherein, due to the curved nature of the groove (72), as the pin arm (82) moves from a position near a first groove end (74) to a position near a second groove end (76), the pin arm (82) causes the first gear (84) to rotate.

2. The video deployment system according to claim 1, further comprising a housing, wherein the housing covers the deployment assembly, and wherein the housing covers the video monitor in the first position.

3. The video deployment system according to claim 1 or 2, wherein the deployment assembly comprises a push-push latch mechanism.

4. The video deployment system according to claim 3, wherein the deployment assembly is further configured to control the speed of the deployment, and
wherein, preferably, the deployment assembly further comprises a pneumatic damper.

5. The video deployment system according to any of claims 1 to 4, wherein the deployment assembly comprises a gear and pin/cam system that rotates the video monitor to a viewing position when in the second position.

6. The video deployment system according to claim 2, wherein said housing has top surface, a bottom surface, a first end, a second end and an opening defined in the second end, and wherein the video monitor lies substantially within the housing in the first position and is deflected out of the opening in the second position, and
wherein, preferably, the top surface of the housing is configured to attach to an interior ceiling of an aircraft.

7. The video deployment system according to claim 3, wherein the push-push latch mechanism is configured to engage the spring-biased pneumatic damper system and the gear and pin/cam system to release and move the video monitor from the first position to the second position, and
wherein, preferably, the push-push latch mechanism is further configured to secure the video monitor in the first position.

8. A video deployment system of any of claims 2 to 7, wherein said housing defines a cavity, the housing having a longitudinal direction running from a first end to a second end, wherein the second end includes an opening to the cavity; and wherein the deployment assembly is configured to move the video monitor in the longitudinal direction between a first position substantially within the deployment system housing and a second position outside the deployment system housing.

9. The video deployment system according to claim 8, wherein the video monitor includes a top portion and a bottom portion, and wherein
the top portion and the bottom portion are aligned along the longitudinal direction in the first position, and
the top portion and the bottom portion are aligned in a direction that crosses the longitudinal direction in the second position.

10. The video deployment system according to claim 9, wherein the bottom portion of the video monitor deflects downward when moving from the first position to the second position.

11. The video deployment system according to claim 9 or 10, wherein the bottom portion of the video monitor is configured to substantially cover the opening to the cavity in the first position.

12. The video deployment system according to any of claims 8 to 11, wherein the deployment assembly comprises a gear and pin/cam system coupled to a spring-biased pneumatic damper system, and
wherein, preferably, the deployment assembly is configured to control the speed of deployment of the video monitor from the first position to the second position.

## Patentansprüche

1. Video-Ausfahrsystem, umfassend:
eine Ausfahr-Anordnung (40), welche dazu eingerichtet ist, eine Video-Anzeige (22) auszufahren und zu verstauen; und
einen Video-Monitor (26), welcher bewegbar an der Ausfahr-Anordnung (40) montiert und zwischen einer ersten Position und einer zweiten Position bewegbar ist, wobei der Video-Monitor (20) mit der Ausfahr-Anordnung (40) gekoppelt und dazu eingerichtet ist, zwischen der ersten Position und der zweiten Position nach unten abgelenkt zu werden, wobei die Ausfahr-Anordnung (40) ein Zahnrad-und-Stift/Nocken-System (80) umfasst, welches mit einem Feder-vorgespannten pneumatischen Dämpfer-System (60) gekoppelt ist, und wobei das Zahnradund-Stift/Nocken-System (80) mit einer Grundplatte (70) gekoppelt ist, welche eine Nut (72) mit einer gekrümmten Form aufweist,
wobei das Zahnrad-und-Stift/Nocken-System (80) eine Mehrzahl von miteinander eingreifenden Zahnrädern (84, 86, 88, 90) umfasst, welche mit dem Video-Monitor (20) und einem Stift (81) gekoppelt sind, wobei der Stift an einem Stiftarm (82) vorgesehen und dazu eingerichtet ist, in der Nut (72) zu gleiten, und
wobei das Zahnrad-und-Stift/Nocken-System (80) ferner umfasst:
ein erstes Zahnrad (84), welches an den Stift (81) gekoppelt ist;
ein zweites Zahnrad (86), welches dazu eingerichtet ist, mit dem ersten Zahnrad (84) einzugreifen;
ein drittes Zahnrad (88), welches mit dem zweiten Zahnrad (86) gekoppelt ist; und
ein viertes Zahnrad (90), welches dazu eingerichtet ist, mit dem dritten Zahnrad (88) einzugreifen und mit dem Video-Monitor (20) gekoppelt ist, wobei aufgrund der gekrümmten Form der Nut (72), wenn der Stiftarm (82) sich von einer Position nahe einem ersten Ende (74) der Nut zu einer Position nahe einem zweiten Ende (76) der Nut bewegt, der Stiftarm (82) das erste Zahnrad (84) dazu veranlasst, sich zu drehen.

2. Video-Ausfahrsystem nach Anspruch 1, ferner umfassend ein Gehäuse, wobei das Gehäuse die Ausfahr-Anordnung bedeckt, und wobei das Gehäuse den Video-Monitor in der ersten Position bedeckt.

3. Video-Ausfahrsystem nach Anspruch 1 oder 2, wobei die Ausfahr-Anordnung einen Druck-Druck-Riegelmechanismus umfasst.

4. Video-Ausfahrsystem nach Anspruch 3, wobei die Ausfahr-Anordnung ferner dazu eingerichtet ist, die Ausfahr-Geschwindigkeit zu steuern/regeln, und
wobei vorzugsweise die Ausfahr-Anordnung ferner einen pneumatischen Dämpfer umfasst.

5. Video-Ausfahrsystem nach einem der Ansprüche 1 bis 4, wobei die Ausfahr-Anordnung ein Zahnrad-und-Stift/Nocken-System umfasst, welches den Video-Monitor in eine Betrachtungs-Position dreht, wenn er sich in der zweiten Position befindet.

6. Video-Ausfahrsystem nach Anspruch 2, wobei das Gehäuse eine obere Fläche, eine untere Fläche, ein erstes Ende, ein zweites Ende und eine in dem zweiten Ende definierte Öffnung aufweist, und wobei der Video-Monitor in der ersten Position im Wesentlichen innerhalb des Gehäuses liegt, und aus der Öffnung in die zweite Position abgelenkt wird, und
wobei vorzugsweise die obere Fläche des Gehäuses dazu eingerichtet ist, an einer Innendecke eines Flugzeugs angebracht zu werden.

7. Video-Ausfahrsystem nach Anspruch 3, wobei der Druck-Druck-Riegelmechanismus dazu eingerichtet ist, mit dem Feder-vorgespannten pneumatischen Dämpfer-System und dem Zahnrad-und-Stift/Nocken-System zusammenzuwirken, um den Video-Monitor freizugeben und von der ersten Position in die zweite Position zu bewegen, und
wobei vorzugsweise der Druck-Druck-Riegelmechanismus ferner dazu eingerichtet ist, den Video-Monitor in der ersten Position zu sichern.

8. Video-Ausfahrsystem nach einem der Ansprüche 2 bis 7, wobei das Gehäuse einen Hohlraum definiert, wobei das Gehäuse eine Längsrichtung aufweist, welche von einem ersten Ende zu einem zweiten Ende verläuft, wobei das zweite Ende eine Öffnung zu dem Hohlraum umfasst; und
wobei die Ausfahr-Anordnung dazu eingerichtet ist, den Video-Monitor in der Längsrichtung zwischen einer ersten Position im Wesentlichen innerhalb des Ausfahrsystem-Gehäuses und einer zweiten Position außerhalb des Ausfahrsystem-Gehäuses zu bewegen.

9. Video-Ausfahrsystem nach Anspruch 8, wobei der Video-Monitor einen oberen Abschnitt und einen unteren Abschnitt umfasst, und wobei der obere Abschnitt und der untere Abschnitt entlang der Längsrichtung in der ersten Position ausgerichtet sind, und
der obere Abschnitt und der untere Abschnitt in der zweiten Position in einer Richtung ausgerichtet sind, welche die Längsrichtung kreuzt.

10. Video-Ausfahrsystem nach Anspruch 9, wobei der untere Abschnitt des Video-Monitors nach unten abgelenkt wird, wenn er sich von der ersten Position in die zweite Position bewegt.

11. Video-Ausfahrsystem nach Anspruch 9 oder 10, wobei der untere Abschnitt des Video-Monitors dazu eingerichtet ist, die Öffnung zu dem Hohlraum in der ersten Position im Wesentlichen abzudecken.

12. Video-Ausfahrsystem nach einem der Ansprüche 8 bis 11, wobei die Ausfahr-Anordnung ein Zahnrad-und-Stift/Nocken-System umfasst, welches mit einem Feder-vorgespannten pneumatischen Dämpfer-System gekoppelt ist, und
wobei vorzugsweise die Ausfahr-Anordnung dazu eingerichtet ist, die Ausfahr-Geschwindigkeit des Video-Monitors von der ersten Position in die zweite Position zu regeln/steuern.

## Revendications

1. Un système de déploiement vidéo comprenant :
un ensemble de déploiement (40) conçu pour déployer et arrimer un affichage vidéo (22) ; et
un moniteur vidéo (26) monté de manière mobile à l'ensemble de déploiement (40) et mobile entre une première position et une deuxième position, dans lequel ledit moniteur vidéo (20) est couplé à l'ensemble de déploiement (40) et conçu pour se détourner vers le bas entre la première position et la deuxième position, dans lequel l'ensemble de déploiement (40) comprend un système d'engrenage et goupille/came (80) raccordé à un système amortisseur pneumatique chargé par ressort (60) et dans lequel le système d'engrenage et goupille/came (80) est raccordé à une plaque de base (70) possédant une rainure (72) de nature courbée,
dans lequel le système d'engrenage et goupille/came (80) comprend plusieurs engrenages d'emboîtement (84, 86, 88, 90) raccordés au moniteur vidéo (20) et à une goupille (81), la goupille étant montée sur un bras de goupille (82) et conçue pour coulisser dans la rainure (72) et
dans lequel le système d'engrenage et goupille/came (80) comprend par ailleurs:
un premier engrenage (84) couplé à la goupille (81) ;
un deuxième engrenage (86) conçu pour s'emboîter avec le premier engrenage (84) ;
un troisième engrenage (88) couplé au deuxième engrenage (86) ; et
un quatrième engrenage (90) conçu pour s'emboîter avec le troisième engrenage (88) et couplé au moniteur vidéo (20), le bras de la goupille (82) faisant tourner le premier engrenage (84) en raison de la nature courbée de la rainure (72) lorsque le bras de la goupille (82) se déplace d'une position proche d'une première extrémité de rainure (74) vers une position proche d'une deuxième extrémité de rainure (76).

2. Le système de déploiement vidéo selon la revendication 1 comprenant par ailleurs un logement, le logement couvrant l'ensemble de déploiement et le logement couvrant le moniteur vidéo dans la première position.

3. Le système de déploiement vidéo selon l'une des revendications 1 ou 2, dans lequel l'ensemble de déploiement comprend un mécanisme de verrouillage à poussoir.

4. Le système de déploiement vidéo selon la revendication 3, dans lequel l'ensemble de déploiement est par ailleurs conçu pour commander la vitesse du déploiement et dans lequel, de préférence, l'ensemble de déploiement comprend par ailleurs un amortisseur pneumatique.

5. Le système de déploiement vidéo selon l'une des revendications 1 à 4, dans lequel l'ensemble de déploiement comprend un système d'engrenage et de goupille/came qui fait tourner le moniteur vidéo vers une position de visualisation lorsqu'il se trouve dans la deuxième position.

6. Le système de déploiement vidéo selon la revendication 2, dans lequel ledit logement possède une surface supérieure, une surface inférieure, une première extrémité, une deuxième extrémité et une ouverture ménagée dans la deuxième extrémité et dans lequel le moniteur vidéo se trouve globalement à l'intérieur du boîtier dans la première position et s'écarte de l'ouverture dans la deuxième position, et dans lequel la surface supérieure du logement est de préférence conçue pour se fixer à un plafond intérieur d'un avion.

7. Le système de déploiement vidéo selon la revendication 3, dans lequel le mécanisme de verrouillage à poussoir est conçu pour engager le système d'amortisseur pneumatique chargé par ressort et le système d'engrenage et goupille/came pour débloquer et déplacer le moniteur vidéo de la première position vers la deuxième position et
dans lequel, de préférence, le mécanisme de verrouillage à poussoir est par ailleurs conçu pour fixer le moniteur vidéo dans la première position.

8. Un système de déploiement vidéo selon l'une des revendications 2 à 7, dans lequel ledit boîtier définit une cavité, le boîtier possédant une direction longitudinale allant d'une première extrémité vers une deuxième extrémité, dans lequel la deuxième extrémité comprend une ouverture vers la cavité ; et dans lequel l'ensemble de déploiement est conçu pour déplacer le moniteur vidéo dans la direction longitudinale entre une première position située globalement à l'intérieur du logement du système de déploiement et une deuxième position située à l'extérieur du logement du système de déploiement.

9. Le système de déploiement vidéo selon la revendication 8, dans lequel le moniteur vidéo comprend une partie supérieure et une partie inférieure et dans lequel la partie supérieure et la partie inférieure sont alignées le long de la direction longitudinale dans la première position et
la partie supérieure et la partie inférieure sont alignées dans une direction qui traverse la direction longitudinale dans la deuxième position.

10. Le système de déploiement vidéo selon la revendication 9, dans lequel la partie inférieure du moniteur vidéo s'écarte vers le bas lors du déplacement de la première position vers la deuxième position.

11. Le système de déploiement vidéo selon l'une de revendications 9 ou 10, dans lequel la partie inférieure du moniteur vidéo est conçue pour couvrir globalement l'ouverture vers la cavité dans la première position.

12. Le système de déploiement vidéo selon l'une des revendications 8 à 11 dans lequel l'ensemble de déploiement comprend un système d'engrenage et de goupille/came couplé à un système amortisseur pneumatique chargé par ressort, et
dans lequel, de préférence, l'ensemble de déploiement est conçu pour régler la vitesse de déploiement du moniteur vidéo de la première position vers la deuxième position.
